# EUROPEAN PATENT SPECIFICATION

(11) **EP 2 820 341 B1**
(45) Date of publication and mention of the grant of the patent: **29.03.2017**
(21) Application number: 13721048.0
(22) Date of filing: 28.02.2013
(51) Int. Cl.: F16L 11/22, H01B 7/04, F16L 1/19, H02G 1/10, H01B 7/18

(54) **UMBILICAL**
ZUFUHRLEITUNG
OMBILICAL

(30) Priority: 01.03.2012 GB 201203596
(43) Date of publication of application: 07.01.2015
(73) Proprietor: Technip France, 92400 Courbevoie (FR)
(72) Inventor: Bell, Michael, Bedlington NE22 7LT (GB)
(74) Representative: Earnshaw, Geoffrey Mark
(86) International application number: PCT/IB2013/000530
(87) International publication number: WO 2013/128279

(56) References cited:
- WO-A1-2008/075964
- WO-A1-2008/075965
- WO-A1-2009/128725
- WO-A1-2011/065842
- US-A- 3 794 750
- US-A- 4 427 033
- US-A1- 2003 113 080

## Description

The present invention relates to an umbilical for use in the offshore production of hydrocarbons, and in particular to an umbilical for use in deep water applications.

An umbilical for use in the offshore production of hydrocarbons generally comprises a group of one or more types of elongated active umbilical components, such as electrical cables, optical fibre cables, steel pipes and/or hoses, cabled together for flexibility, over-sheathed and, when applicable, armoured for mechanical strength. Umbilicals are typically used for transmitting power, signals and/or working fluids (for example for fluid injection, hydraulic power, gas release, etc.) to and from a subsea installation.

ISO 13628-5 "Specification for Subsea Umbilicals", provides standards for the design and manufacture of such umbilicals.

The umbilical cross-section is generally circular, the elongated elements being wound together either in a helical or in a S/Z pattern. In order to fill the interstitial voids between the various umbilical elements and to obtain the desired configuration, filler components may be included within the voids. The S/Z winding process is less expensive to implement than the helical winding process, which makes it possible to manufacture 'low cost' umbilicals, but the drawback of this low cost solution is its limited water depth. An S/Z wound core would not be suitable for deeper depths, where helically wound steel tube umbilicals are more used.

Subsea umbilicals are now being installed at increasingly deeper water depths, commonly being deeper than 2000m. Such umbilicals therefore have to be able to withstand the increasingly severe loading conditions during their installation and their service life.

The installation of many or most deep water umbilicals is carried out with a vertical tensioner of the type described in GB2303897, and known in the art by the term "vertical laying system" (VLS). Such a laying method is particularly designed for deep water depths. The vertical tensioner grips a length of the umbilical by means of at least one pair of opposed endless belts, usually more pairs, and sometimes termed 'caterpillar tracks'. However, this arrangement requires the clamping forces of the caterpillar tracks on the outside of the umbilical to be transmitted to the load carrying components of the umbilical in such a way that said load carrying components can take up the tensile forces generated by the weight of the umbilical as it is being lowered from the laying ship.

However, some umbilical components, especially those near the outside of the core, and more particularly those forming an outer layer, are generally wound with a long pitch (such as a few meters) and a small helix angle, (such as less than 20°), such that they are usually almost parallel to the longitudinal axis of the umbilical. This assists the formation and manufacture of the umbilical, but has hitherto resulted in a tendency for these outermost components to slide longitudinally inside the outer sheath during VLS installation.

The main load carrying components in charge of withstanding the tensile loads due to the suspended weight of the umbilical below the laying ship are usually tubes (US6472614, WO93/17176, GB2316990), steel rods (US6472614), composite rods (WO2005/124095, US2007/0251694), steel ropes (GB2326177, WO2005/124095), composites ropes (GB2326177) or tensile armour layers (see Figure 1 of US6472614). The other components in the umbilical, i.e. the electrical and optical cables, the thermoplastic hoses, the polymeric external sheath and the polymeric filler components, do not contribute significantly to the tensile strength of the umbilical.

With increasing water depths and the increasing use of 'heavy' power cables comprising 'large section' copper conductors, the suspended weight of such umbilicals is getting significantly greater. This impacts on the ability of a VLS to cope with the increasing amount of tensile force between the weight of the umbilical and the VLS. Some prior art solutions to increase the VLS installation capacity are the following:
- to increase the clamping force (crushing load) of the vertical tensioner. However this solution requires a more powerful VLS, and may damage the umbilical if its crushing limit is reached.
- to increase the total surface of contact between the caterpillar tracks and the umbilical, which can be done by increasing the number and/or length and/or the width of the caterpillar tracks. Increasing the contact surface makes it possible to increase the crushing load without damaging the umbilical. However, this again leads to a larger VLS, and thus to a larger and more expensive installation vessel.

One solution is to simply keep on increasing the VLS size/capacity. However, there is a need to reduce the installation costs of laying umbilicals in deeper water, and/or a need to increase the range of water that can be reached with currently available 'medium size' VLS and installations vessels.

WO2008/075965A and WO2009/128725A disclose umbilicals having a plurality of load carrying umbilical components arranged as an outer layer and surrounded by an outer sheath. A filler material between the umbilical components can be configured with longitudinally extending grooves or flutes formed therein such that the material that forms the outer sheath penetrates into these grooves when extruded onto the umbilical bundle. However, this requires the additional step of forming the longitudinal grooves or flutes. The grooves or flutes only assist in resisting rotational movement between the outer sheath and the umbilical bundle, whereas the tensile forces caused by the free-hanging weight of the umbilical are usually vertical. Also, the strength of the friction between the outer sheath and the umbilical components is only based on the width of the grooves or flutes, which meanwhile eat into the space available for forming the umbilical.

US6691743 B2 relates to a flexible flowline pipe for transporting hydrocarbon fluids such as oil and gas, rather than a supporting umbilical. Such flexible flowline pipes must resist high internal pressures and/or external pressures, and also withstand longitudinal bending or twisting without the risk of being ruptured. As such, it requires a structural assembly able to resist radial forces, and at least one ply, generally at least two crossed plies, of tensile armor wires wound with a long pitch prior to the application of an external protective sheath. A single continuous element is wound around the at least one armor ply to penetrate the helical gaps between the armor wires, to increase the friction at the interface between the armor wires and the outer sheath. However, this again requires an additional processing step for the adding of the elongate element, and is particular to acting on an outer armor ply of a hydrocarbon fluid flowline.

US4427033 discloses introducing a bending strain relief device with adjustable stiffness into a submarine cable to limit the amount of bending the cable is subjected to in use. This requires the introduction of first and second sets of stiffening rods, an expandable body, and a control means, into the submarine cable.

It is an object of the present invention to provide an umbilical with improved interlocking between its core of umbilical elements and its outer sheath, without additional processing or manufacturing steps.

Thus, according to one aspect of the present invention, there is provided a subsea umbilical comprising an outer sheath, a core enclosed by the outer sheath and comprising a plurality of helically wound umbilical components, and a tape wound between the outer sheath and the core,
characterized in that the tape comprises a plurality of rigid elements which provide raised formations extending more than 0.5mm above the remainder of the tape, and adapted to press into or against the outer sheath and the core when subject to loading.

By combining a plurality of rigid elements with a tape, the present invention is able to increase the friction between the core and its outer sheath as part of an existing manufacturing step of adding a final tape or band around the core prior to adding the outer sheath. In particular, the use of a plurality of rigid elements can engage with the more individual nature of helically wound umbilical elements forming an outer layer of the core, as opposed to engaging a continuous layer such as the armor plies of a flowline pipe.

As mentioned above, an umbilical consists of a group of one or more types of elongated active umbilical components, including but not limited to electrical cables, optical fibre cables, steel tubes, hoses, steel rods, composite rods, steel ropes and composite ropes, cabled together for flexibility. At least some of these elongated components form a core, which may also comprise one or more tensile armour layers, optionally cross-wound. In the present invention, the core may comprise at least an outer layer of a number of umbilical components. All such umbilical components are helically wound, i.e. the elongated elements forming the core are wound in a constant helical pattern all along the structure.

Preferably, the umbilical of the present invention is a 'steel tube umbilical', wherein all or most of the elongated umbilical components which form the active part of the umbilical are steel tubes. Such steel tubes, and any other elongated umbilical elements that make up the umbilical, are wound together in a helical pattern for use in deeper water, which therefore provide 'deep water steel tube umbilicals'.

The outer sheath may be made from any suitable material, generally being formed from one or more polymers, able to be formed around the core to provide an external protective layer, and optionally also a smooth layer.

To assist the bundling of the umbilical components prior to the addition of the outer sheath, a tape is typically applied around the outer layer of umbilical components. Such tape is generally simply wound around the core in a known manner, generally in a helical lay. The tape can be termed a "closure tape" or "strength band", and provides closure and/or strength to the collocation of the umbilical components prior to the addition, generally extrusion, of the outer sheath therearound.

The rigid elements may be formed of any suitable material, including one or more metals, plastics and combinations thereon. The rigid elements may comprise one or more of the group comprising: wires, rods, strands, strips and small spheres. Typical materials include steel, such as steel wires, Kevlar, such as Kevlar strands, and polymers such as nylon or polyethylene, in particular HDPE.

Optionally, the rigid elements are made from a metal or metal alloy.

Optionally, the rigid elements are made from a polymer.

The rigid elements may be continuous or non-continuous, interconnected or discrete from each other.

Preferably, the tape comprises a plurality of continuous and discrete rigid elements.

Some of the rigid elements may be the same or different, both in terms of material or physical parameters and properties, including size, strength, design.

The rigid elements provide raised formations extending from the remainder of the tape, the raised formations adapted to press into or against the parts of the umbilical which the tape contacts in use.

In this way, the rigid elements can provide a 'maximum thickness' of the tape, whilst the regions or spaces in between the rigid elements can form a 'minimum thickness' of the tape.

The height of the raised formations is more than 0.5mm, preferably more than 1mm above the remainder of the tape. Typically, the height of the raised formations is between 0.5mm and 3mm.

The rigid elements may be arranged using any suitable arrangement either across, within, or otherwise in combination with the remainder of the tape, and optionally in one or more directions, including straight, curved, and/or a mixture of same for one or more different rigid elements.

Preferably, the rigid elements are wholly or substantially parallel, and are in non-alignment with the longitudinal axis of the core and outer sheath once conjoined therewith.

Optionally, the rigid elements are arranged along the longitudinal axis of the tape, generally being transverse to the width of the tape.

The rigid elements may be distributed across and/or along the tape in a regular or non-regular arrangement or distribution. This could include having irregular spacing between the rigid elements, and/or one or more different spacings between the rigid elements, such spacings optionally being in a regular or patterned form.

Preferably, the rigid elements are arranged in regular spaced intervals.

The rigid elements may have a constant or a non-constant cross-section along their length, such as being tapered.

Preferably, the rigid elements have a regular cross-sectional shape, such as being circular or otherwise rounded or elliptical, and including polygonal shapes. The thickness or diameter of the rigid elements may be in the range 0.5mm and 3mm, preferably between 0.7mm and 1.1mm.

Where the rigid elements comprise strips, the strips may be formed of a combination of a number of elongate elements, generally being the same or similar and formed in an integral manner. One example includes a rectangular high density polyethylene strip being 5mm x 0.8mm.

The thickness of the tape between the rigid elements may be the same or different, generally being the same or similar to the thickness of conventional tapes having no integral rigid elements. The thickness of the tape may be between 0.1mm and 2mm, preferably between 0.2 and 0.5mm

The spacing between the rigid elements may be in the range 5mm and 30mm, preferably between 10mm and 20mm.

The rigid elements may be formed with the remainder of the tape to provide an integral tape in any known manner or method. The rigid elements may be applied in one or more steps, stages or portions, onto or into the remainder of the tape, generally being in the form of one or more tape materials, such as tape layers.

In one embodiment of the present invention, the rigid elements are bonded to one or both sides or a tape material, to provide the tape. Optionally, the rigid elements comprise at least a first set of rigid elements having a first property or parameter, such as a first diameter, and second set of rigid elements having a different property or parameter, such as a second diameter. Optionally, the tape can be formed with a first set of rigid elements on one side of the tape material, and a second different set of rigid elements on the other side of the tape material.

According to another embodiment of the present invention, the rigid elements are embedded within the tape. Thus, the rigid elements can be applied to a first tape material layer, followed by the addition of a second tape material layer thereover. In an alternative, the rigid elements are extruded with the tape material therearound.

One face of the tape is preferably able to readily adhere to another surface, such as including one or more adhesives thereon. This provides for easier winding, and better stability of the tape once formed.

The loading of the umbilical, in order to press the rigid elements into or against the outer sheath and the core, can be applied by any suitable means, apparatus or device, being onshore and/or offshore. In one example, the umbilical could be pre-compressed onshore during manufacture, and prior to its laying. In another embodiment, the loading is applied by the application of one or more compressed loads provided during laying of the umbilical, such as but not limited to the loading provided by a vertical laying system.

Thus, according to another embodiment of the present invention, the loading comprises one or more of the group comprising: torsional, compressive, shear and radial forces.

Preferably, at least one of the umbilical components of the core which is in contact with the tape, is either polymeric or is over-sheathed with a polymer layer. In a more preferred embodiment, at least half of the umbilical components of the core which are in contact with the tape, are either polymeric or are over-sheathed with a polymer layer, or a combination of both. This characteristic of such umbilical components can increase the friction coefficient between the tape and the components, and thus the overall core. The rigid elements of the tape are preferably harder than the external polymeric nature of such components, such that such rigid elements are adapted to press into the external polymeric components when subjected to compressive loading

The rigid elements providing raised formations extending from the remainder of the tape and adapted to press into or against the parts of the umbilical which the tape contacts in use, allow the tape to thereby increase the frictional coefficient between said parts.

According to a second aspect of the present invention, there is provided a method of improving the interlocking in an umbilical between an outer sheath and a core comprising a plurality of helically wound umbilical components, comprising at least the steps of:
winding a tape as defined herein between the outer sheath and the core to increase the frictional coefficient between said parts, and
subjecting the umbilical to loading to press the tape into or against the outer sheath and the core.

Embodiments of the present invention will now be described by way of example only and with reference to the accompanying drawings in which:
Figure 1 is a cross sectional view of an umbilical according to one embodiment of the present invention;
Figure 2 is a schematic cross-sectional side view of a portion of an umbilical being laid using the VLS;
Figure 3 is a plan view of a tape for an umbilical for use in an embodiment of the present invention;
Figure 4 is a perspective plan view of the tape of Figure 3 with a significantly greater width;
Figure 5 is a side cross sectional view of a portion of the tape of Figures 3 and 4;
Figures 6a and 6b are side cross sectional views of two alternative tapes for use in further embodiments of the present invention;
Figure 7 is a top perspective view of an umbilical according to a further embodiment of the present invention; and
Figure 8 is a side cross-sectional view of a portion of Figure 7.

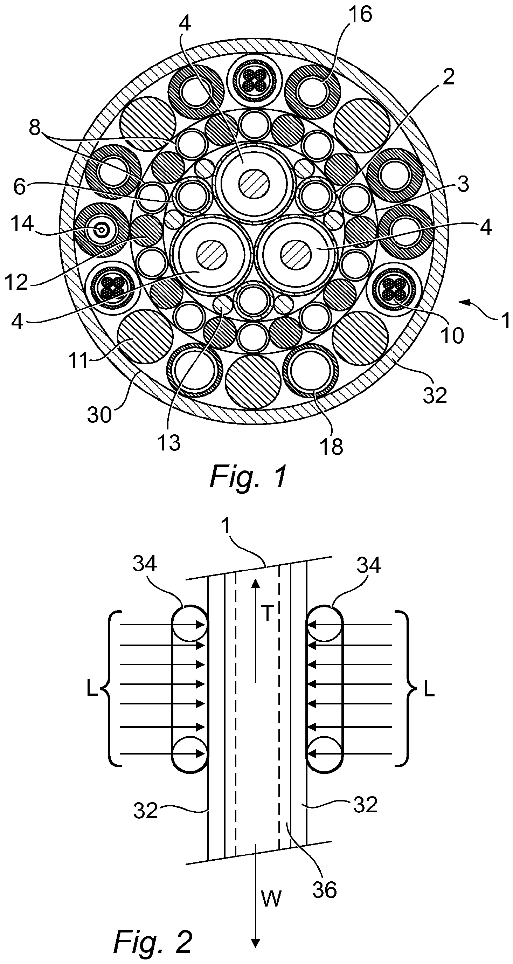

Referring to the drawings, Figure 1 shows an umbilical 1 for use in the offshore production of hydrocarbons. It includes three central electrical power cables 4, a number of steel tubes 8, a number of steel tubes over-sheathed with a polymer sheath 6 , 16, 18, optical fiber cables 14, a number of electrical signal cables 10, and a number of different polymeric filler components 11, 12, 13, which together form a core.

In the arrangement shown in Figure 1, the core has a first number of central umbilical components surrounded by a first band 2, a second number of concentric umbilical components therearound surrounded by a second band 3, and a third number of umbilical components forming an outer layer. The outer layer is enclosed by a final outer band 30, all of which is then enclosed by an outer sheath 32.

All the umbilical components shown in Figure 1 are helically wound. As at least the majority of the umbilical components are steel tubes, the umbilical is a steel tube umbilical.

According to the present invention, the outer band 30 is a tape wound around the core, said tape comprising a plurality of rigid elements adapted to press into or against the outer sheath 32 and the core when subject to compressive loading.

At least half of the components of the core which are in contact with the tape 30 are polymeric or over-sheathed with a polymer layer in order to increase the friction coefficient between the tape 30 and the core. In the best mode, the steel tubes 16, 18 which are in contact with the tape 30 are individually over-coated with a polymeric sheath.

Figure 2 shows a schematic side view of a part of the laying of the umbilical 1 based on a vertical laying system (VLS). The umbilical 1 passes through a tower (not shown) having one, more usually a number, or opposing caterpillar tracks 34 intended to provide a load L against the outer sheath 32 of the umbilical 1 as it passes through the tracks 34. This tangential load L helps to hold the suspended weight W of the umbilical 1, with an opposing tensioning load T. The suspended weight W is generally calculated to be almost equal to the tensioning load T because dynamic loads are much smaller than static ones, due to the relatively low vertical speed of an umbilical during its installation. The tensioning load T of the VLS is proportional to the product of the friction coefficient between the outer sheath 32 and the outer layer of umbilical components as shown in Figure 1, and denoted as layer 36 in Figure 2.

As the outer umbilical components are generally wound with a long pitch of a few meters, and with a small helix angle, often less than 20°, they are almost parallel to the umbilical axis. Thus, conventionally, such components have a tendency to slide longitudinally inside the outer sheath 32 during VLS installation. This tendency clearly increases the greater the depth of the water in which the umbilical is to be installed, due to the increased amount of suspended weight W from the laying vessel (not shown).

In conventional umbilical VLS laying, the friction coefficient is generally about 0.1. Any significant increase in this friction coefficient would allow the tensioning capacity to be significantly increased, allowing the laying of heavier umbilicals with existing laying apparatus, or the laying of existing umbilicals with smaller (and generally more commercially available) installation vessels, or a combination of same.

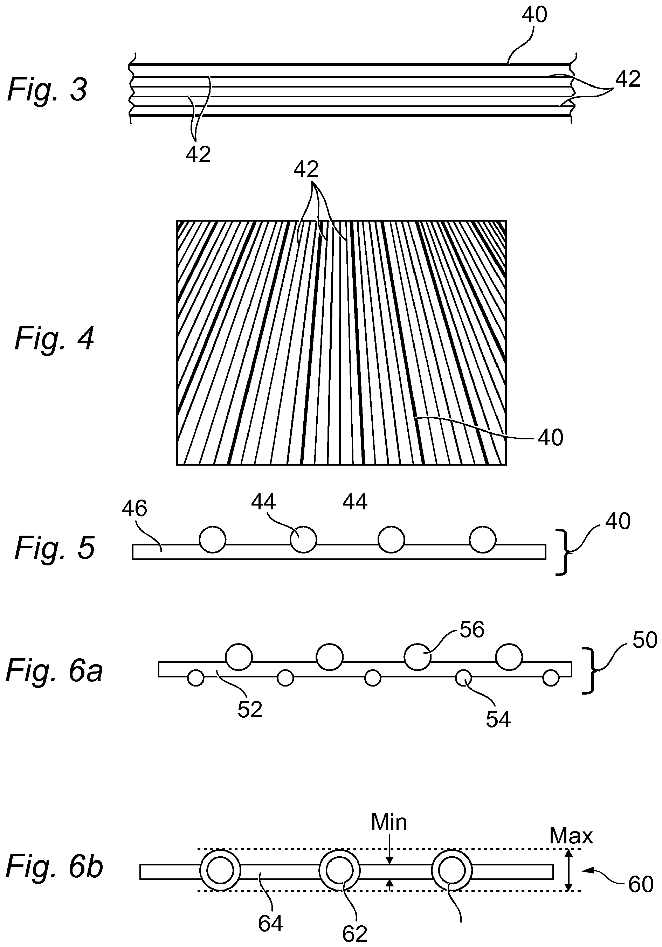

Figure 3 shows a first tape 40 for an umbilical according to one embodiment of the present invention. The tape 40 comprises a plurality of rigid elements 42 integrally provided with said tape 40, the rigid elements 42 providing raised formations extending from the remainder of the tape 40 as shown more clearly in Figure 5. The raised formations are adapted to press into or against the parts of the umbilical which the tape contacts in use, the tape thereby increasing the frictional coefficient between such parts.

Figure 4 is a plan perspective view of a wide tape 40 of Figure 3.

Figure 5 is a side cross-sectional view of the tape 40 of Figures 3 and 4, showing the plurality of rigid elements 42 being a series of regularly spaced steel wires 44, on a tape material 46.

By way of example only, and for the purposes of providing one illustration of the present invention, the rigid elements 42 are steel wires 44, each with a diameter in Figure 5 of approximately 1mm, and the thickness of the tape material 46 between the wires 44 is approximately 0.3mm. The steel wires 44 could be spaced approximately 10mm therebetween.

In another illustrative example only, the rigid elements 42 are Kevlar strands, each with a diameter of approximately 0.5mm. Such strands could also have a thickness of the tape material between the strands of approximately 0.3mm, and the strands could be spaced approximately 10mm therebetween.

The tape 40 of Figure 5 could be manufactured by the simple laying of the steel wires 44 along the tape material 46, for the direct or indirect subsequent application of the tape 40 to the outer layer of umbilical components, when forming the umbilical.

Figure 6a shows a side cross-sectional view of a second tape 50 for an umbilical, comprising a tape material 52 having a first set of rigid elements 54 on one side of the tape material 52, and a second set of rigid elements 56 having a different diameter to those of the first set, on the other side of the tape material 52. In this way, different interlocking can be achieved on either side of the tape 50 against the outer sheath and the core/umbilical components, in any manner desired by the skilled man when considering the umbilical layout and/or desired friction coefficient in the umbilical during its laying, and in particular during its laying through a VLS.

Optionally, the distribution of the first set and second set of rigid elements 54, 56 maybe the same or different, and may be regular or irregular, and may be aligned or non-aligned with each other. The present invention is not limited by the size, nature or design of the rigid elements, or by the size, nature or design of different sets of rigid elements, or by any alignment or distribution thereinbetween.

Figures 6b shows a side cross-sectional view of a third tape 60 for an umbilical, comprising a plurality of rigid elements 62 embedded within a tape material 64.

Figure 6b shows a maximum thickness of the third tape 60 where the rigid elements 62 occur, with a minimum thickness in the portions of the tape 64 between the rigid elements 62.

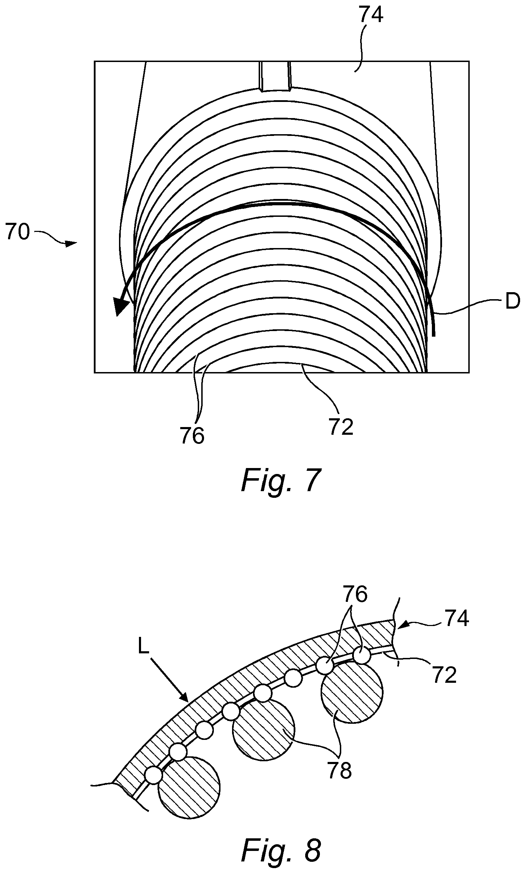

Figure 7 shows an umbilical 70 according to one embodiment of the present invention, comprising a core of helically wound umbilical components, having at least an outer layer of umbilical components (some of which are labeled 78 in Figure 8), which components are within and surrounded by a tape 72, and then further surrounded by an outer sheath 74. The tape 72 comprises a plurality of rigid elements 76 adapted to press into or against the outer sheath 74 and the umbilical components when subject to loading.

The tape 72 is wound in direction D, and can be wound around the umbilical components 78 at any suitable angle. Preferably, the tape 72 is wound around the core with a helix angle comprised between 50° and 90°.

In one or more onshore processes, and optionally during the VLS process as shown in Figure 2, a load is applied to the outer sheath 74, in particular a compressive load such as that that can be applied by the caterpillar tracks 34. During this loading, the rigid elements 76 are pressed into or against the outer sheath 74 and the outer layer of umbilical components 78 to improve the interlocking thereinbetween.

By using a plurality of rigid elements 76, especially when added at a different, preferably a very different, winding pitch angle compared with the outermost umbilical elements in the core, there are multiple engagements and locking between the outer sheath 74 and the individual nature of each of the umbilical components 78 in the outer layer. This increases the friction coefficient thereinbetween, even if the outer form of the core does not provide a smooth or regular layer.

Furthermore, because of the freedom of design in the number, nature and layout of the rigid elements with the tape, the skilled man is able to adapt the tape to suit the nature and form of the umbilical. The present invention is adaptable to the variation of umbilical components forming the core provided by the nature of different umbilicals known in the art, especially the arrangement of the outer layer of umbilical components, and to the depth of laying. This allows the umbilical manufacturer and/or umbilical layer to consider the laying of heavier umbilicals with existing laying apparatus, especially VLS laying apparatus, and/or the laying of existing umbilicals with smaller (and generally more commercially available) installation vessels.

The loading of the umbilical 70 and the interlocking of the tape 72 can increase the friction coefficient thereinbetween to a value which is able to exceed 0.15 or even 0.2. This increases the tensioning capacity available by at least 50%, or even by 100%, making it possible for the same VLS apparatus to lay the same umbilicals in deeper water, and/or to lay heavier umbilicals. Suspended weights of 100 tonnes or more can be achieved by the present invention.

Various modifications and variations to the described embodiments of the invention will be apparent to those skilled in the art without departing from the scope of the invention as defined herein. Although the invention has been described in connection with specific preferred embodiments it should be understood that the invention as defined herein should not be unduly limited to such specific embodiments.

## Claims

1. A subsea umbilical (1) comprising an outer sheath (32), a core enclosed by the outer sheath and comprising a plurality of helically wound umbilical components (78), and a tape (40) wound between the outer sheath and the core,
**characterized in that** the tape comprises a plurality of rigid elements (42) which provide raised formations extending more than 0.5mm above the remainder of the tape, and adapted to press into or against the outer sheath and the core when subject to loading.

2. An umbilical as claimed in claim 1 wherein all or most of the umbilical components (78) are steel tubes (8), and the umbilical is a steel tube umbilical having a helically wound core.

3. An umbilical as claimed in any one of the preceding claims wherein the rigid elements (42) are in non-alignment with the longitudinal axis of the core and the outer sheath (32).

4. An umbilical as claimed in any one of the preceding claims wherein the rigid elements (42) comprise one or more of the group comprising; wires (44), rods, strands, strips and small spheres.

5. An umbilical as claimed in any one of the preceding claims wherein the rigid elements (42) are arranged along the longitudinal axis of the tape (40).

6. An umbilical as claimed in any one of the preceding claims wherein the rigid elements (42) are bonded to one or both sides of the tape (40).

7. An umbilical as claimed in any one of claims 1 to 5 wherein the rigid elements (62) are embedded within the tape (60).

8. An umbilical as claimed in any one of the preceding claims wherein the rigid elements (42) are made from a metal or metal alloy.

9. An umbilical as claimed in any one of claims 1 to 7, wherein the rigid elements (42) are made from a polymer.

10. An umbilical as claimed in any one of the preceding claims wherein the loading comprises one or more of the group comprising: torsional, compressive, shear and radial forces.

11. An umbilical as claimed in any one of the preceding claims wherein at least one of the umbilical components (78) of the core which is in contact with the tape(40), is either polymeric or is over-sheathed with a polymer layer.

12. An umbilical as claimed in claim 11 wherein at least half of the umbilical components (78) of the core which are in contact with the tape (40), are either polymeric, or are over-sheathed with a polymer layer, or a combination of same.

13. A method of improving the interlocking in a subsea umbilical (1) between an outer sheath (32) and an enclosed core comprising a plurality of helically wound umbilical components (78), comprising at least the steps of:
winding a tape (40) as defined by claim 1 between the outer sheath and the core to increase the frictional coefficient between said parts, and
subjecting the umbilical to loading to press the tape into or against the outer sheath and the umbilical components.

## Patentansprüche

1. Ein Unterwasserversorgungskabel (1), beinhaltend einen Außenmantel (32), einen Kern, der von dem Außenmantel umschlossen ist und eine Vielzahl von schneckenförmig gewickelten Versorgungskabelkomponenten (78) beinhaltet, und ein Band (40), das zwischen den Außenmantel und den Kern gewickelt ist,
**dadurch gekennzeichnet, dass** das Band eine Vielzahl von steifen Elementen (42) beinhaltet, die erhöhte Formationen bereitstellen, welche sich um mehr als 0,5 mm über den Rest des Bands erstrecken und angepasst sind, um bei Aussetzung gegenüber einer Belastung in oder gegen den Außenmantel und den Kern zu drücken.

2. Versorgungskabel gemäß Anspruch 1, wobei alle oder der Großteil der Versorgungskabelkomponenten (78) Stahlrohre (8) sind und das Versorgungskabel ein Stahlrohrversorgungkabel mit einem schneckenförmig gewickelten Kern ist.

3. Versorgungskabel gemäß einem der vorhergehenden Ansprüche, wobei die steifen Elemente (42) nicht nach der Längsachse des Kerns und des Außenmantels (32) ausgerichtet sind.

4. Versorgungskabel gemäß einem der vorhergehenden Ansprüche, wobei die steifen Elemente (42) eines oder mehrere aus der Gruppe beinhalten, die Folgendes beinhaltet: Drähte (44), Stangen, Stränge, Streifen und kleine Kugeln.

5. Versorgungskabel gemäß einem der vorhergehenden Ansprüche, wobei die steifen Elemente (42) entlang der Längsachse des Bands (40) angeordnet sind.

6. Versorgungskabel gemäß einem der vorhergehenden Ansprüche, wobei die steifen Elemente (42) an eine oder beide Seiten des Bands (40) gebunden sind.

7. Versorgungskabel gemäß einem der Ansprüche 1 bis 5, wobei die steifen Elemente (62) in das Band (60) eingebettet sind.

8. Versorgungskabel gemäß einem der vorhergehenden Ansprüche, wobei die steifen Elemente (42) aus einem Metall oder einer Metalllegierung gefertigt sind.

9. Versorgungskabel gemäß einem der Ansprüche 1 bis 7, wobei die steifen Elemente (42) aus einem Polymer gefertigt sind.

10. Versorgungskabel gemäß einem der vorhergehenden Ansprüche, wobei die Belastung eines oder mehrere aus der Gruppe beinhaltet, die Folgendes beinhaltet: Torsions-, Druck-, Scher- und Radialkräfte.

11. Versorgungskabel gemäß einem der vorhergehenden Ansprüche, wobei mindestens eine der Versorgungskabelkomponenten (78) des Kerns, die mit dem Band (40) in Kontakt ist, entweder polymer ist oder mit einer Polymerschicht ummantelt ist.

12. Versorgungskabel gemäß Anspruch 11, wobei mindestens die Hälfte der Versorgungskabelkomponenten (78) des Kerns, die mit dem Band (40) in Kontakt sind, entweder polymer sind oder mit einer Polymerschicht ummantelt sind oder eine Kombination davon sind.

13. Ein Verfahren zur Verbesserung des Ineinandergreifens in einem Unterwasserversorgungskabel (1) zwischen einem Außenmantel (32) und einem umschlossenen Kern, welcher eine Vielzahl von schneckenförmig gewickelten Versorgungskabelkomponenten (78) beinhaltet, das mindestens die folgenden Schritte beinhaltet:
Wickeln eines Bands (40), wie gemäß Anspruch 1 definiert, zwischen den Außenmantel und den Kern, um den Reibungskoeffizienten zwischen den Teilen zu vergrößern, und
Aussetzen des Versorgungskabels einer Belastung, um das Band in oder gegen den Außenmantel und die Versorgungskabelkomponenten zu drücken.

## Revendications

1. Un ombilical sous-marin (1) comprenant une gaine externe (32), une âme enfermée par la gaine externe et comprenant une pluralité de composants d'ombilical enroulés de façon hélicoïdale (78), et un ruban (40) enroulé entre la gaine externe et l'âme, **caractérisé en ce que** le ruban comprend une pluralité d'éléments rigides (42) qui apportent des formations en relief s'étendant plus de 0,5 mm au-dessus du reste du ruban, et conçues pour presser dans ou contre la gaine externe et l'âme lorsqu'elles sont soumises à une charge.

2. Un ombilical tel que revendiqué dans la revendication 1 dans lequel tous les composants d'ombilical (78) ou la majorité d'entre eux sont des tubes d'acier (8), et l'ombilical est un ombilical en tube d'acier possédant une âme enroulée de façon hélicoïdale.

3. Un ombilical tel que revendiqué dans l'une quelconque des revendications précédentes dans lequel les éléments rigides (42) ne sont pas en alignement avec l'axe longitudinal de l'âme et de la gaine externe (32).

4. Un ombilical tel que revendiqué dans l'une quelconque des revendications précédentes dans lequel les éléments rigides (42) comprennent un ou plusieurs éléments du groupe comprenant : des fils métalliques (44), des tiges, des brins, des bandes et de petites sphères.

5. Un ombilical tel que revendiqué dans l'une quelconque des revendications précédentes dans lequel les éléments rigides (42) sont disposés le long de l'axe longitudinal du ruban (40).

6. Un ombilical tel que revendiqué dans l'une quelconque des revendications précédentes dans lequel les éléments rigides (42) sont collés à un côté du ruban (40) ou aux deux côtés de celui-ci.

7. Un ombilical tel que revendiqué dans l'une quelconque des revendications 1 à 5 dans lequel les éléments rigides (62) sont intégrés au sein du ruban (60).

8. Un ombilical tel que revendiqué dans l'une quelconque des revendications précédentes dans lequel les éléments rigides (42) sont réalisés à partir d'un métal ou d'un alliage de métaux.

9. Un ombilical tel que revendiqué dans l'une quelconque des revendications 1 à 7, dans lequel les éléments rigides (42) sont réalisés à partir d'un polymère.

10. Un ombilical tel que revendiqué dans l'une quelconque des revendications précédentes dans lequel la charge comprend une ou plusieurs forces du groupe comprenant : des forces de torsion, compressives, de cisaillement et radiales.

11. Un ombilical tel que revendiqué dans l'une quelconque des revendications précédentes dans lequel au moins l'un des composants d'ombilical (78) de l'âme qui sont en contact avec le ruban (40), est soit en polymère, soit sur-gainé d'une couche de polymère.

12. Un ombilical tel que revendiqué dans la revendication 11 dans lequel au moins la moitié des composants d'ombilical (78) de l'âme qui sont en contact avec le ruban (40), sont soit en polymère, soit sur-gainés d'une couche de polymère, soit une combinaison des mêmes.

13. Une méthode d'amélioration de l'entrelacement dans un ombilical sous-marin (1) entre une gaine externe (32) et une âme enfermée comprenant une pluralité de composants d'ombilical enroulés de façon hélicoïdale (78), comprenant au moins les étapes suivantes :
enroulement d'un ruban (40) tel que défini par la revendication 1 entre la gaine externe et l'âme afin d'augmenter le coefficient de frottement entre lesdites parties, et
soumission de l'ombilical à une charge afin de presser le ruban dans ou contre la gaine externe et les composants d'ombilical.
